# EUROPEAN PATENT SPECIFICATION

(11) **EP 2 999 911 B1**
(45) Date of publication and mention of the grant of the patent: **06.03.2019**
(21) Application number: 13885074.8
(22) Date of filing: 20.05.2013
(51) Int. Cl.: F16L 51/02, F24F 13/02, F16L 39/00

(54) **DUCT ASSEMBLIES WITH INTERNALLY BOLTED EXPANSION JOINT**
DURCHGANGSBAUGRUPPEN MIT INTERN VERSCHRAUBTER DEHNUNGSFUGE
ENSEMBLES DE CONDUITS AVEC JOINT DE DILATATION BOULONNÉ À L'INTÉRIEUR

(43) Date of publication of application: 30.03.2016
(73) Proprietor: Fluor Technologies Corporation, Sugar Land, TX 77478 (US)
(72) Inventor: JOHNSON, Dennis W., Simpsonville, South Carolina 29681 (US); BROWN, James Hurley, Simpsonville, South Carolina 29681 (US); SMITH, Fred C., Marietta, Ohio 45750 (US); JACKSON, Kim Moody, Marietta, South Carolina 29661 (US); SMOAK, Bradley D., Greenville, South Carolina 29615 (US)
(74) Representative: De Bortoli, Tiziano
(86) International application number: PCT/US2013/041899
(87) International publication number: WO 2014/189489

(56) References cited:
- EP-A1- 0 519 636
- EP-A2- 0 879 986
- FR-A1- 2 643 699
- FR-A1- 2 751 048
- US-A- 3 593 468
- US-A- 3 811 714
- US-A- 5 443 290
- US-A1- 2009 194 266
- US-B1- 6 402 203
- US-B2- 8 033 576

## Description

### Field of the Invention

The field of the invention is expansion joints and especially expansion joints for duct assemblies.

### Background

The following description includes information that may be useful in understanding the present invention. It is not an admission that any of the information provided herein is prior art or relevant to the presently claimed invention, or that any publication specifically or implicitly referenced is prior art. Moreover, all publications and other external materials discussed herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

Expansion joints for gas and liquid conduits are known for a relatively long time, and a typical expansion joint is illustrated in US 1,263,953. Here, the expansion joint is installed via external flanges and uses a single layer of flexible materials to accommodate for differences in length due to thermal expansion. In a similar arrangement, US 3,460,856 teaches an externally (with respect to the internal volume of the conduit) mounted expansion joint with a composite layer of flexible material for use with high-temperature gases. To control problems associated with dust, ash, or other solid particles, US 4,090,726 employs a baffle arrangement in a typical externally mounted expansion joint with an expansion fabric, and US 6,027,147 discloses an internal dust seal in combination with a typical know externally mounted expansion joint.

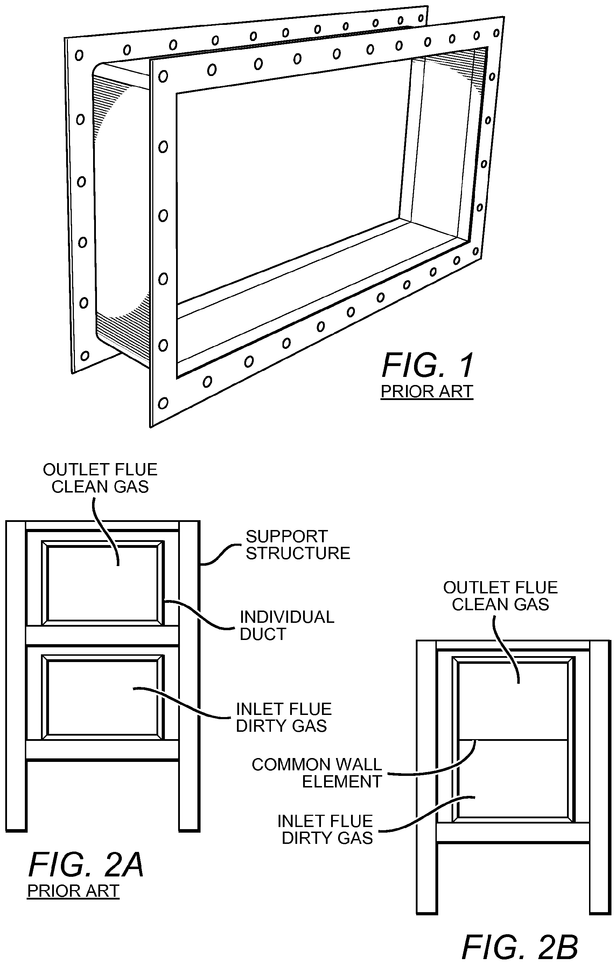

Alternatively, in yet other known examples of known expansion joints, external sliding expansion members may be used in place of expansion fabric as shown in FR 2,274,859, and in a similar manner, US 3,730,566 discloses use of sliding plates and an external expansion fabric. **Prior Art** **Figure 1** shows a typical expansion joint for a single duct. While most of the currently known expansion joints are suitable for single and relatively small ducts, significant difficulties arise where the expansion joint is intended for use with contiguous ducts, and particularly with contiguous ducts with relatively large internal diameter (e.g., smallest dimension of at least 1 m). For example, large diameter ducts are often separately constructed and also separately supported on respective suitable support structures as is shown in **Prior Art** **Figure 2A****.** Here, significant quantities of steel are required for the support structure as well as substantial quantities of duct materials. Additionally, each duct requires its own expansion joint where such joints are needed.

To reduce the significant material cost and construction work, ducts may be configured as contiguous duct assemblies as schematically illustrated in **Figure 2B****.** In such case, substantial material savings can be achieved by use of a common wall element between two ducts, and by providing a single support structure for the contiguous duct assembly. However, currently known expansion ducts as described above are not suitable for installation as such joints accommodate only single ducts. Therefore, to include an expansion joint, a transition or split of the ducting must be implemented to separate the contiguous duct into separate ducts that can then be fitted with the expansion joint. However, such configurations typically complicate structural support design and construction, and add significant cost.

Therefore, while numerous expansion joints are known in the art, there is still a need for improved devices and methods of expansion joints, especially for contiguous duct assemblies.

US 3,593,468 discloses a duct assembly according to the preamble of claim 1.

### Summary of The Invention

The present invention is directed to devices and methods for expansion joins for use with contiguous duct assemblies that advantageously allow coupling of two duct assemblies via the expansion joint in a manner such that the first and second ducts of the respective duct assemblies need not be separated to accommodate the expansion joint. As used herein, and unless the context dictates otherwise, the term "coupled to" is intended to include both direct coupling (in which two elements that are coupled to each other contact each other) and indirect coupling (in which at least one additional element is located between the two elements). Therefore, the terms "coupled to" and "coupled with" are used synonymously.

In one aspect of the inventive subject matter a contiguous duct assembly that includes a first and a second duct that are fluidly isolated from each other and coupled together such that both ducts share a common wall element along their longitudinal axes. Contemplated duct assemblies further include an expansion joint having first and second frame portions that are coupled to respective ends of the first and second ducts. A connector element is coupled to the common wall element and is configured to form part of the expansion joint, wherein one portion of the connector element extends into an inner volume of the first duct and wherein another portion of the connector element extends into an inner volume of the second duct. It is further preferred that a first and a second expansion fabrics are coupled to the one portion and the other portion of the connector element via a plurality of fasteners (e.g., bolt and nut fasteners), wherein the plurality of fasteners are disposed in the inner volumes of the first and second ducts, respectively.

It is generally preferred that the common wall element is thermally insulated when the duct is used for flue gases rather than air, and that the first and second ducts have a height or width that is at least two meters. While not limiting to the inventive subject matter, it is generally preferred that at least a portion of the first and/or the second frame portions form the connector element. In other aspects, it is preferred that the first and the second frame portion and the connector portion are removably coupled to the first and second ducts. Additionally, it is contemplated that a dust shield may be coupled to the expansion joint for the first or second duct.

Therefore, and viewed from a different perspective, an internally bolted expansion joint for a contiguous duct assembly as noted above will include a connector element that is coupled to the common wall element and configured to form part of the expansion joint, wherein one portion of the connector element extends into an inner volume of the first duct and wherein another portion of the connector element extends into an inner volume of the second duct. A first and a second expansion fabric are preferably coupled to the two portions of the connector element via a plurality of fasteners, wherein the fasteners are disposed as least in part in the inner volumes of the first and second ducts, respectively.

While not limiting to the inventive subject matter, it is preferred that the connector element is welded to the common wall element, or that the connector element is removably coupled to the common wall element via a secondary connector element and a secondary fastener, wherein the secondary fastener is removable from and disposed within the inner volume of the first or second duct. As noted before, it is typically preferred that the first and second ducts and the common wall element are thermally insulated, and/or that a dust shield is coupled to the common wall element, the connector element, the first duct, or the second duct. In still further contemplated aspects, the contiguous duct assembly is coupled to a further continuous duct assembly having a third duct and a fourth duct via the expansion fabric.

Therefore, the inventors also contemplate a method of forming a contiguous duct assembly in which in one step a first duct is provided that lacks a permanent wall element along its longitudinal axis, wherein the first duct further includes a first alignment flange. In another step, a second duct is provided that has a permanent wall element along its longitudinal axis, wherein the second duct further includes a second alignment flange. In a still further step of contemplated methods, the first and second ducts are positioned such that the permanent wall element of the second duct forms a common wall element for the first and second ducts along the longitudinal axis of the first and second ducts, and a connector element is coupled to the common wall element and forms part of an expansion joint, wherein one portion of the connector element extends into an inner volume of the first duct and wherein another portion of the connector element extends into an inner volume of the second duct. In yet another step, a first and a second expansion fabric are coupled from within the first and second ducts to the one portion and the other portion of the connector element via a plurality of fasteners, respectively, and in still another step, the first and second alignment flanges are coupled from the outside of the first and second ducts to so form the contiguous duct assembly.

Most typically, the first duct has a supplemental stiffener in place of the permanent wall, and/or the first and second duct and the common wall element are thermally insulated. Where desired, a dust shield is coupled to the first and/or second ducts, and/or the connector element. It is also further preferred that the first and second alignment flanges are removably coupled to each other, and/or that a further contiguous duct assembly is coupled to the contiguous duct assembly via the first and second expansion fabrics.

Various objects, features, aspects and advantages of the inventive subject matter will become more apparent from the following detailed description of preferred embodiments, along with the accompanying drawing figures in which like numerals represent like components.

### Brief Description of The Drawings

Prior Art Figure 1 is a photograph of an exemplary known expansion joint.
Prior Art Figure 2A is an exemplary schematic for a known configuration for flue gas ducts, and Figure 2B is an exemplary schematic for a contiguous duct assembly.
Figure 3A is an exemplary schematic longitudinal cross section for a contiguous duct assembly and expansion joint according to the inventive subject matter, and Figure 3B is a detail view of two connector elements that are coupled to each other via an expansion fabric.
Figure 4 is an exemplary schematic of a pre-assembled contiguous duct according to the inventive subject matter.
Figure 5A depicts exemplary cross sectional shapes for contiguous duct assemblies according to the inventive subject matter,
Figure 5B shows an exemplary slide plate and exemplary pliable seals for use in the contiguous duct assemblies.
Figure 6 is an exemplary "I" joint for use in the contiguous duct assemblies.
Figure 7 is a second exemplary schematic longitudinal cross section for a contiguous duct assembly and expansion joint according to the inventive subject matter.
Figure 8 is an exemplary schematic of a segmented backing plate for a contiguous duct assembly to ease assembly.

### Detailed Description

The inventors have discovered that significant material and labor reduction is possible for duct work with expansion joints, and particularly for large-scale ducts with expansion joints by configuring the duct work as contiguous duct assembly in which an expansion joint is formed at the end of the contiguous duct assembly using a connector element that projects into the interior of the ducts to serve as an anchor point for the expansion fabric. Most preferably, as the devices and methods contemplated herein are especially suitable for large-scale ducts, all (or almost all) of the fasteners used to install the expansion joint are disposed within the interior of the ducts. Thus, it should be appreciated that the internal bolted expansion joint will solve the problem of expensive transitions to use conventional externally bolted expansion joints.

Consequently, it should be recognized that numerous advantages can be achieved for large-scale duct assemblies according to the inventive subject matter, including reduction in structural steel required for support, reduction in steel and other duct materials (and insulation), reduction in construction costs, and reduction in overall height which advantageously reduces seismic and wind loads. In addition, it should be appreciated that the contiguous duct assemblies with expansion joint presented herein allow the expansion joints to be made without tailored transitions and/or splitting of the ducts. Moreover, as all installation and maintenance work for the expansion joint can be performed from the inside of the ducts, potential safety hazards (e.g., falling hazard) are effectively reduced. Lastly, due to the modular nature, contiguous duct assemblies can be trucked and assembled in situ, which significantly improves among other things construction sequencing by eliminating the intermediate support.

The following discussion provides many example embodiments of the inventive subject matter. Although each embodiment represents a single combination of inventive elements, the inventive subject matter is considered to include all possible combinations of the disclosed elements. Thus if one embodiment comprises elements A, B, and C, and a second embodiment comprises elements B and D, then the inventive subject matter is also considered to include other remaining combinations of A, B, C, or D, even if not explicitly disclosed. Moreover, as used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

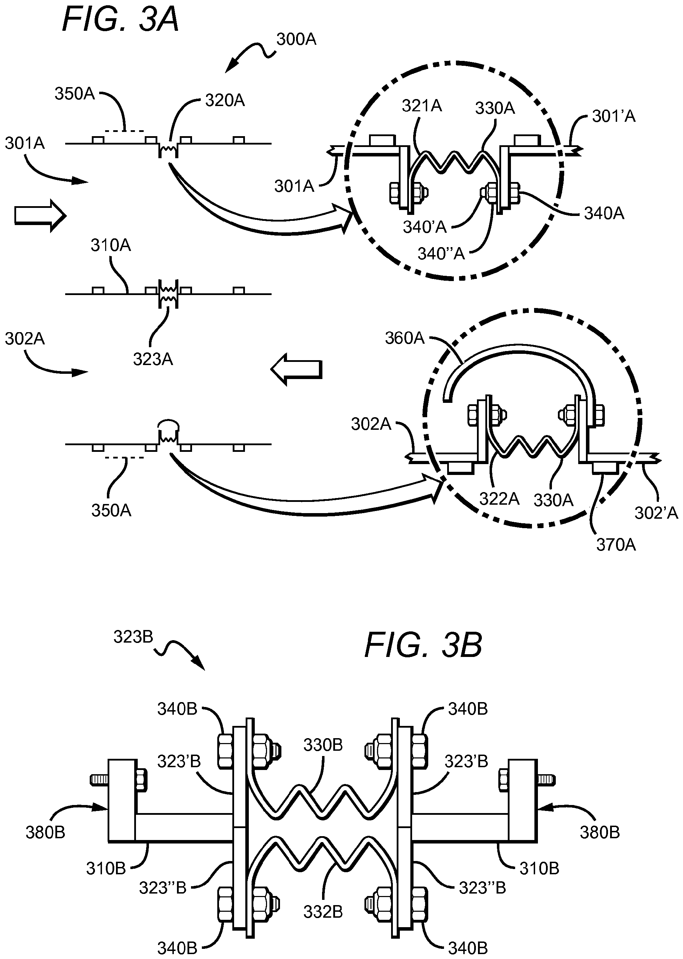

One exemplary example of a contiguous duct assembly with an expansion joint is shown in **Figure 3A** schematically depicting a vertical cross section along the longitudinal direction of a duct assembly in which both ducts have a rectangular profile. Here, a contiguous duct assembly 300A has a first duct 301A and a second duct 302A, wherein first and second ducts are fluidly isolated from each other to allow isolated flow of a clean gas (upper arrow) and flow of a particle-laden flue gas. Both ducts share common wall element 310A along the longitudinal axis of the first and second ducts. Here, the bottom wall of the first duct 301A is shared with the top wall of the second duct 302A. The common wall element 310A incorporates stiffeners 350A or other common structure to make the wall rigid (only some is shown in Figure 3A). Both ducts are preferably lined with thermally insulation material (not shown), but insulation is not required in the common wall 310A when the temperature in the first duct 301A and second duct 302A are close (e.g., within 10, more typically 20, and most typically 30 °C. In this exemplary aspect, the expansion joint 320A is configured to flexibly couple first and second ducts 301A and 302A to third and fourth ducts 301'A and 302'A. The insets in Figure 3A illustrate the upper and lower portions of the expansion joint in more detail. Here, it can be seen that first and third ducts (301A and 301'A) are coupled to each other via expansion fabric 330A, which is in turn coupled to the ducts via first and second frame portions (321A and 322A) that are coupled to the respective ends of the first and second ducts. In the example of Figure 3A, coupling is achieved via the nut and bolt fasteners (340A, 340'A, and backer bar 340"A). The second duct joint portion may include a dust shield 360A. Also shown is exemplary stiffener element 370A that provides additional rigidity to the walls of first duct 301A and a second duct 302A, third and fourth ducts 301'A and 302'A, and so on. Connector element 323A is coupled to the common wall element 310A and configured to form part of the expansion joint.

**Figure 3B** shows the connector element 323B in more detail. Here, one portion (323'B) of the connector element extends into the inner volume of the first duct (301A, not shown, see Fig. 3A), and another portion (323"B) of the connector element extends into an inner volume of the second duct (302A, not shown, see Fig. 3A). It should be noted that the connector element may be formed from protruding ends 323'B and 323"B that are coupled (typically welded) to the common wall element 310B. Alternatively, the connector element may also be formed from a common wall portion 310B and a secondary connector element 380B, which in turn is then preferably removably coupled to the common wall element of the ducts via a plurality of fasteners or permanently coupled by welding. Regardless of the nature of the connector element, it is generally preferred that first and a second expansion fabrics (332B/330B) are coupled to the respective portions of the connector element via a plurality of fasteners (preferably bolt and nut fasteners, 340B). As will be readily appreciated, the plurality of fasteners is typically disposed in the inner volumes of the first and second ducts, respectively, to thereby allow for installation of the entire expansion joint from the inside of the ducts. Alternatively, a slide plate and a mating receiving structure may be used in addition to the expansion fabric. Furthermore and as already noted before, it is generally preferred that the common wall element (and other wall elements) is not required to be thermally insulated while the rest of the duct is preferably insulated using suitable insulation material. (350A, Fig. 3A).

Depending on the particular configuration and operational parameters, it should be noted that the at least a portion of the first and/or the second frame portions will form the connector element. For example, first and second frame portions may be configured as internal flanges wherein two sides of the flanges abut against each other and so form the connector element. Alternatively, the connector element may be an independent element that extends beyond the inner diameter of the ducts and cooperates with one or more external flanges on the outside of the ducts. Regardless of the particular manner of constructions, it is typically preferred that the first and/or the second frame portion, and/or the connector element are removably coupled to the first and second ducts to facilitate installation, maintenance, and/or removal.

Thus, and viewed from another perspective, an internally bolted expansion joint for a contiguous duct assembly with fluidly isolated ducts and a common wall element as noted above will preferably have a connector element that is coupled to the common wall element and that is configured to form part of the expansion joint. In particularly preferred aspects, one portion of the connector element extends into an inner volume of the first duct while another portion of the connector element extends into an inner volume of the second duct. As before, it is generally preferred that a first and a second expansion fabric is coupled to the extending portions via a plurality of fasteners, wherein the fasteners are disposed in the inner volumes of the first and second ducts, respectively. In most typical examples, two distinct expansion fabrics will be coupled to the connector element to thereby allow formation of two distinct sealing elements that circumferentially enclose the respective ducts. However, in at least some circumstances, only a single expansion fabric may extend along the connecting element.

As noted above, the connector element may be welded to the common wall element, or may be removably coupled to the common wall element, for example, via a secondary connector element 380B and secondary fasteners, which are most preferably removable from and disposed within the inner volume of the first or second duct. Likewise, a dust shield and/or slide element may be included (e.g., coupled to the common wall element, the connector element, the first duct, and/or the second duct) in a manner as set forth above, and be coupled to the common wall element, the connector element, the first duct or the second duct. Of course, it should be appreciated that contemplated contiguous duct assemblies will be coupled to one or more other continuous duct assemblies (typically via the expansion fabric) to so form an elongated contiguous duct assembly. Other common elements of expansion joints such as insulation pillows may also be included.

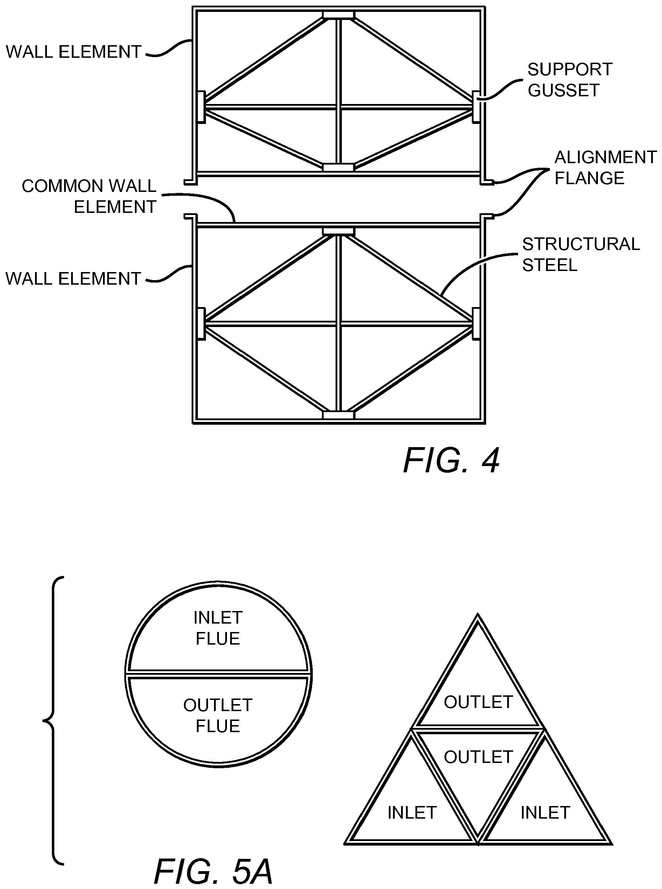

With respect to installation of large contiguous duct assemblies, the inventors contemplate a method of forming a contiguous duct assembly in which a first duct is provided that lacks a permanent wall element along its longitudinal axis of the first duct, and that further has a first alignment flange. A second duct is then provided that has a permanent wall element along its longitudinal axis of the second duct, and that further has a second alignment flange. First and second ducts are then positioned relative to each other such that the permanent wall element of the second duct forms a common wall element for the first and second ducts along the longitudinal axis of the first and second ducts. As noted before, especially preferred contiguous duct assemblies will also include a connector element that is coupled to the common wall element and that forms part of an expansion joint (as before, one portion of the connector element extends into the inner volume of the first duct and another portion of the connector element extends into the inner volume of the second duct). In a further installation step, first and second expansion fabrics are coupled from within the first and second ducts to the extending portions of the connector element via a plurality of fasteners, and in a further step, first and second alignment flanges are coupled to each other from the outside of the first and second ducts to so form the contiguous duct assembly. A typical exemplary pre-assembled contiguous duct assembly is shown in **Figure 4****.**

It should be especially noted that such contiguous duct assemblies are especially suitable for shipping of preassembled ducts. Most typically, the first duct has a supplemental stiffener in place of the permanent wall to help maintain structural soundness. In addition, it is generally preferred that the first and second duct and the common wall element are thermally insulated prior to finishing the installation. Furthermore, and while not limiting to the inventive subject matter, it is generally preferred that the first and second alignment flanges are removably coupled to each other. For extension of duct runs, it is contemplated that multiple contiguous duct assemblies can be coupled to each other in a manner as already explained above.

With respect to the size and material of the ducts in the contiguous duct assembly it is generally contemplated that all sizes and materials are deemed appropriate for use herein. However, it is especially preferred that the individual ducts have a square or rectangular cross section, and exemplary cross sections and assemblies are schematically illustrated in **Figure 5A****.** Moreover, while all diameters are generally suitable, particularly preferred ducts will typically have a smallest internal dimension (e.g., width or height) of at least 1 meter, more typically at least 2 meter, and most typically at least 3 meter. Viewed from another perspective, the ducts are preferably sized such that a person can kneel, and more typically stand upright in the inner diameter of a duct. Therefore, additional structural features (e.g., stiffeners, corrugations, honeycomb layers, etc.) may form part of the wall elements of the ducts, or may be found outside the duct in a scaffold upon which the duct is fabricated. Therefore, especially preferred materials include metals and metal alloys, which are particularly suitable for air or gases at elevated temperatures (e.g., at least 100°C, more typically at least 200°C, and commonly at least 400°C). In some cases of saturated gases, fiberglass reinforced plastic materials may be used or linings may be applied.

With respect to the common wall element it is generally preferred that the common wall element extends along the majority of the duct, and most typically is an entire wall of the duct (in most cases extending along the longitudinal axis). Thus, particularly preferred common wall elements will form the bottom of a first duct and the ceiling of another duct to so allow for maximum material and weight reduction. Of course, and where necessary, reinforcing elements may be included to improve or maintain structural integrity. Most typically, the common wall element will have internal supports, and it is therefore preferred that insulation material is provided to the entire duct to so avoid difficulties with differential expansion.

Most typically, contemplated contiguous duct assemblies and expansion joints will be useful in the routing of various high-volume gas streams, and especially air or flue gases. Therefore, the duct assemblies are especially contemplated in power plants, steel mills, pulp and paper processing plants, calcinations facilities, etc. Moreover, contemplated contiguous duct assemblies and expansion joints are particularly advantageous where multiple duct assemblies are coupled together to form long runs and long spans (e.g., at least 30 meter, more typically at least 50 meter, most typically at least 100 meter).

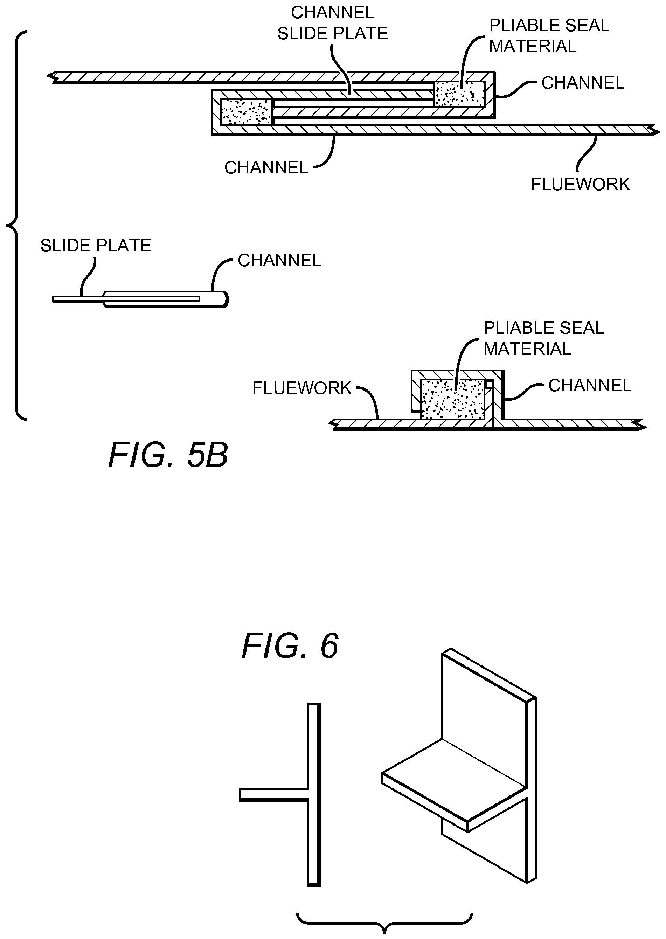

In further contemplated aspects of the inventive subject matter, it is generally preferred that the expansion fabric is made from a fabric, a natural or synthetic polymer, a metal, a refractory material, and all reasonable combinations thereof. Moreover, it is generally preferred that the expansion material is relatively flexible, that is, will deform without loss of functional integrity under operating conditions. Alternatively, one or more slide elements (e.g., fabricated from Teflon™; DuPont) or pliable sealing materials that cooperate with mating receiving structures could replace one or more fabric elements as is exemplarily shown in **Figure 5B****.** However, these alternatives are not covered by the present invention.

It should also be recognized that suitable connector elements may considerably vary in their exact configurations and number. However, it should be recognized that preferred connector elements will allow installation, retention, and removal of the extension fabric (or slide plate or pliable sealing material) from the inside of a duct. Viewed from another perspective, it should be appreciated that the connector element is preferably configured such that all connections are disposed within the inner diameter of the ducts. Therefore, suitable connector elements may be configured as internal flanges. Alternatively, a pair of frames may be configured to allow installation and coupling of one side of the frame to the ends of the duct (typically from within the duct), while the remaining sides of the frames are coupled together via an expansion fabric (again, typically from within the duct). Thus, the expansion joint may be delivered to a job site in a preassembled manner, or may require assembly at the site.

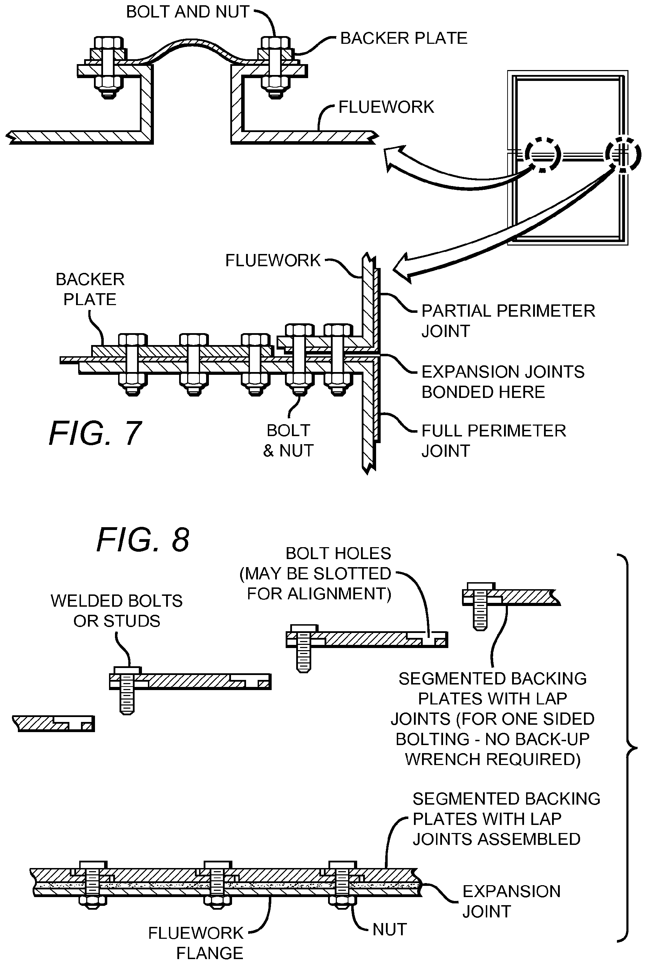

**Figure 6** shows a "T" joint that would be used in another example of a contiguous duct assembly with an expansion joint as shown in Figure 7, which schematically depicts a cross section of a duct assembly in which both ducts have a rectangular profile. At the ends of all three ends of the "T", a splice is made to make a complete expansion joint. When the "T" is not used, as shown on **Figure 7****,** a continuous rectangular expansion joint is overlapped at a splice in the corners of the common wall elements. **Figure 8** shows an improved backing plate design that is segmented and connected with welded bolts or studs for one sided final fastening.

Regardless of the manner of construction, it should be appreciated that the internal bolted expansion joint will solve the problem of expensive transitions to use conventional externally bolted expansion joints. Of course, it should be noted that the internal bolt material may need to be upgraded to accommodate for the conditions in the ducts (e.g., corrosive and erosive). As also already noted before, it should be noted that the material of the expansion joint should be compatible with the design conditions, and especially the temperature.

It should be apparent to those skilled in the art that many more modifications besides those already described are possible without departing from the inventive concepts herein. The inventive subject matter, therefore, is not to be restricted except in the scope of the appended claims. Moreover, in interpreting both the specification and the claims, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced. Where the specification claims refers to at least one of something selected from the group consisting of A, B, C .... and N, the text should be interpreted as requiring only one element from the group, not A plus N, or B plus N, etc.

## Claims

1. A contiguous duct assembly, comprising:
a first duct (310A) and a second duct (302A), wherein the first and second ducts are fluidly isolated from each other and coupled together such that the first and second ducts share a common wall element (310A) along a longitudinal axis of the first and second ducts;
**characterized by**:
an expansion joint having a first and a second frame portion that are coupled to respective ends of the first and second ducts;
a connector element (323B) that is welded or removably coupled to the common wall element via a secondary connector element and a secondary fastener to the common wall element and that is configured to form part of the expansion joint, wherein one portion (323'B) of the connector element extends into an inner volume of the first duct and wherein another portion (323"B) of the connector element extends into an inner volume of the second duct;
a first and a second expansion fabric (330B, 332B) coupled to the one portion and the other portion of the connector element via a plurality of fasteners (340B), respectively; and
wherein the plurality of fasteners are disposed in the inner volumes of the first and second ducts, respectively.

2. The contiguous duct assembly of claim 1 wherein the first and second ducts (301A, 302A) have a height or width that is at least two meters.

3. The contiguous duct assembly of claim 1 wherein at least a portion of the first and/or the second frame portions form the connector element (323B).

4. The contiguous duct assembly of claim 1 wherein the first and the second frame portion and the connector element (323B) are removably coupled to the first and second ducts.

5. The contiguous duct assembly of claim 1 wherein the fasteners element (340B) are bolt and nut fasteners.

6. The contiguous duct assembly of claim 1 further comprising a dust shield (360A) coupled to the expansion joint or the first or second duct.

7. The contiguous duct assembly of claim 1 further comprising a "T" joint to form a single expansion joint.

8. The contiguous duct assembly of claim 1 further comprising a segmented backing bar to allow one sided fastening.

9. A contiguous duct assembly according to any one of the previous claims, wherein the secondary fastener is removable from and disposed within the inner volume of the first or second duct (301A, 302A).

10. A contiguous duct assembly according to any one of the previous claims, wherein the first and second ducts (301A, 302A) and the common wall element (310A) are thermally insulated.

11. A contiguous duct assembly according to any one of the previous claims, wherein the expansion fabrics (330B, 332B) are configured to be coupled to a further contiguous duct assembly having a third duct and a fourth duct (301'A, 302'A).

12. A method of forming a contiguous duct assembly, comprising:
providing a first duct (301A) lacking a permanent wall element along a longitudinal axis of the first duct, wherein the first duct further includes a first alignment flange;
providing a second duct (302A) having a permanent wall element along a longitudinal axis of the second duct, wherein the second duct further includes a second alignment flange;
positioning the first and second ducts such that the permanent wall element of the second duct forms a common wall element (310A) for the first and second ducts along the longitudinal axis of the first and second ducts;
wherein a connector element (323B) is coupled to the common wall element and forms part of an expansion joint, wherein one portion (323'B) of the connector element extends into an inner volume of the first duct and wherein another portion (323"B) of the connector element extends into an inner volume of the second duct;
coupling from within the first and second ducts a first and a second expansion fabric (330B, 332B) to the one portion and the other portion of the connector element via a plurality of fasteners (340B), respectively; and
coupling the first and second alignment flanges from outside the first and second ducts to so form the contiguous duct assembly.

13. The method of claim 12 further comprising a step of coupling a dust shield (360A) to at least one of the first and second ducts (301A, 302A) or the connector element (323B).

14. The method of claim 12 wherein the first and second alignment flanges are removably coupled to each other.

## Patentansprüche

1. Zusammenhängende Kanalbaugruppe, umfassend:
einen ersten Kanal (301A) und einen zweiten Kanal (302A), wobei der erste und zweite Kanal fluidtechnisch voneinander isoliert und miteinander gekoppelt sind, so dass der erste und zweite Kanal sich ein gemeinsames Wandelement (310A) entlang einer Längsachse des ersten und zweiten Kanals teilen;
**gekennzeichnet durch**:
eine Expansionsfügestelle, die einen ersten und einen zweiten Rahmenabschnitt aufweist, die mit jeweiligen Enden des ersten und zweiten Kanals gekoppelt sind;
ein Verbinderelement (323B), das mit dem gemeinsamen Wandelement über ein sekundäres Verbinderelement und eine sekundäre Befestigungseinrichtung mit dem gemeinsamen Wandelement geschweißt oder entfernbar gekoppelt ist, und das derart konfiguriert ist, einen Teil der Expansionsfügestelle zu bilden, wobei sich ein Abschnitt (323'B) des Verbinderelements in ein Innenvolumen des ersten Kanals erstreckt, und wobei sich ein anderer Abschnitt (323"B) des Verbinderelements in ein Innenvolumen des zweiten Kanals erstreckt;
ein erstes und ein zweites Expansionsgewebe (330B, 332B), die mit einem Abschnitt bzw. dem anderen Abschnitt des Verbinderelements über eine Mehrzahl von Befestigungseinrichtungen (340B) gekoppelt sind; und
wobei die Mehrzahl von Befestigungseinrichtungen in den Innenvolumen des ersten bzw. zweiten Kanals angeordnet ist.

2. Zusammenhängende Kanalbaugruppe nach Anspruch 1, wobei der erste und zweite Kanal (301A, 302A) eine Höhe oder Breite aufweisen, die zumindest zwei Meter beträgt.

3. Zusammenhängende Kanalbaugruppe nach Anspruch 1, wobei zumindest ein Abschnitt des ersten und/oder des zweiten Rahmenabschnitts das Verbinderelement (323B) bildet.

4. Zusammenhängende Kanalbaugruppe nach Anspruch 1, wobei der erste und der zweite Rahmenabschnitt und das Verbinderelement (323B) entfernbar mit dem ersten und zweiten Kanal gekoppelt sind.

5. Zusammenhängende Kanalbaugruppe nach Anspruch 1, wobei die Befestigungseinrichtungen (340B) Schrauben- und Mutternbefestigungseinrichtungen sind.

6. Zusammenhängende Kanalbaugruppe nach Anspruch 1, ferner mit einer Staubabschirmung (360A), die mit der Expansionsfügestelle oder dem ersten oder zweiten Kanal gekoppelt ist.

7. Zusammenhängende Kanalbaugruppe nach Anspruch 1, ferner mit einer "T"-Fügestelle, um eine einzelne Expansionsfügestelle zu bilden.

8. Zusammenhängende Kanalbaugruppe nach Anspruch 1, ferner mit einer segmentierten Verstärkungsstange, um eine einseitige Befestigung zu ermöglichen.

9. Zusammenhängende Kanalbaugruppe nach einem der vorhergehenden Ansprüche, wobei die sekundäre Befestigungseinrichtung von dem ersten oder zweiten Kanal (301A, 302A) entfernbar und in einem Innenvolumen derselben angeordnet sind.

10. Zusammenhängende Kanalbaugruppe nach einem der vorhergehenden Ansprüche, wobei der erste und zweite Kanal (301A, 302A) und das gemeinsame Wandelement (310A) thermisch isoliert sind.

11. Zusammenhängende Kanalbaugruppe nach einem der vorhergehenden Ansprüche, wobei die Expansionsgewebe (330B, 332B) zur Kopplung mit einer weiteren zusammenhängenden Kanalbaugruppe konfiguriert sind, die einen dritten Kanal und einen vierten Kanal (301'A, 302'A) aufweist.

12. Verfahren zum Formen einer zusammenhängenden Kanalbaugruppe, umfassend, dass:
ein erster Kanal (301A) bereitgestellt wird, dem ein permanentes Wandelement entlang einer Längsachse des ersten Kanals fehlt, wobei der erste Kanal ferner einen ersten Ausrichtflansch aufweist;
ein zweiter Kanal (302A) bereitgestellt wird, der ein permanentes Wandelement entlang einer Längsachse des zweiten Kanals aufweist, wobei der zweite Kanal ferner einen zweiten Ausrichtflansch aufweist;
der erste und zweite Kanal so positioniert werden, dass das permanente Wandelement des zweiten Kanals ein gemeinsames Wandelement (310A) für den ersten und zweiten Kanal entlang der Längsachse des ersten und zweiten Kanals bildet;
wobei ein Verbinderelement (323B) mit dem gemeinsamen Wandelement gekoppelt ist und einen Teil einer Expansionsfügestelle bildet, wobei sich ein Abschnitt (323'B) des Verbinderelements in ein Innenvolumen des ersten Kanals erstreckt, und wobei sich ein anderer Abschnitt (323"B) des Verbinderelements in ein Innenvolumen des zweiten Kanals erstreckt;
von dem Inneren des ersten und zweiten Kanals ein erstes und ein zweites Expansionsgewebe (330B, 332B) mit einem Abschnitt bzw. dem anderen Abschnitt des Verbinderelements über eine Mehrzahl von Befestigungseinrichtungen (340B) gekoppelt wird; und
der erste und zweite Ausrichtflansch von außerhalb des ersten und zweiten Kanals gekoppelt wird, um so die zusammenhängende Kanalbaugruppe zu bilden.

13. Verfahren nach Anspruch 12, ferner mit dem Schritt, dass eine Staubabschirmung (360A) mit zumindest einem des ersten und zweiten Kanals (301A, 302A) oder dem Verbinderelement (323B) gekoppelt wird.

14. Verfahren nach Anspruch 12, wobei der erste und zweite Ausrichtflansch entfernbar miteinander gekoppelt werden.

## Revendications

1. Ensemble de canalisations contiguës, comprenant :
une première canalisation (301A) et une deuxième canalisation (302A), dans lequel les première et deuxième canalisations sont isolées fluidiquement l'une de l'autre et accouplées ensemble de sorte que les première et deuxième canalisations partagent un élément de paroi commun (310A) selon un axe longitudinal des première et deuxième canalisations ;
**caractérisé par** :
un joint de dilatation ayant une première et une seconde portion de cadre qui sont accouplées à des extrémités respectives des première et deuxième canalisations ;
un élément de raccord (323B) qui est soudé ou accouplé amovible à l'élément de paroi commun via un élément de raccord secondaire et une attache secondaire à l'élément de paroi commun et qui est configuré pour faire partie du joint de dilatation,
dans lequel une portion (323'B) de l'élément de raccord s'étend dans un volume interne de la première canalisation et dans lequel une autre portion (323"B) de l'élément de raccord s'étend dans un volume interne de la deuxième canalisation ;
une première et une seconde étoffe de dilatation (330B, 332B) accouplées à une portion et à l'autre portion de l'élément de raccord via une pluralité d'attaches (340B), respectivement ; et
dans lequel la pluralité d'attaches sont disposées dans les volumes internes des première et deuxième canalisations, respectivement.

2. Ensemble de canalisations contiguës selon la revendication 1, dans lequel les première et deuxième canalisations (301A, 302A) ont une hauteur ou une largeur qui fait au moins deux mètres.

3. Ensemble de canalisations contiguës selon la revendication 1, dans lequel au moins une portion des première et/ou seconde portions de cadre forme l'élément de raccord (323B).

4. Ensemble de canalisations contiguës selon la revendication 1, dans lequel la première et la seconde portion de cadre et l'élément de raccord (323B) sont accouplés amovibles aux première et deuxième canalisations.

5. Ensemble de canalisations contiguës selon la revendication 1, dans lequel les attaches (340B) sont des attaches à boulon et écrou.

6. Ensemble de canalisations contiguës selon la revendication 1, comprenant en outre un dispositif pare-poussière (360A) accouplé au joint de dilatation ou à la première ou deuxième canalisation.

7. Ensemble de canalisations contiguës selon la revendication 1, comprenant en outre un joint en « T » pour former un joint de dilatation unique.

8. Ensemble de canalisations contiguës selon la revendication 1, comprenant en outre une barre de renfort segmentée pour permettre une attache à un côté.

9. Ensemble de canalisations contiguës selon l'une quelconque des revendications précédentes, dans lequel la fixation secondaire est amovible du volume interne de la première ou deuxième canalisation (301A, 302A) ou disposée au sein de celui-ci.

10. Ensemble de canalisations contiguës selon l'une quelconque des revendications précédentes, dans lequel les première et deuxième canalisations (301A, 302A) et l'élément de paroi commun (310A) sont isolés thermiquement.

11. Ensemble de canalisations contiguës selon l'une quelconque des revendications précédentes, dans lequel les étoffes de dilatation (330B, 332B) sont configurées pour être accouplées à un ensemble de canalisations contiguës supplémentaires ayant une troisième canalisation et une quatrième canalisation (301'A, 302'A).

12. Procédé de formation d'un ensemble de canalisations contiguës, comprenant :
la fourniture d'une première canalisation (301A) dépourvue d'un élément de paroi permanent selon un axe longitudinal de la première canalisation, dans lequel la première canalisation comporte en outre une première bride d'alignement ;
la fourniture d'une deuxième canalisation (302A) ayant un élément de paroi permanent selon un axe longitudinal de la deuxième canalisation, dans lequel la deuxième canalisation comporte en outre une seconde bride d'alignement ;
le positionnement des première et deuxième canalisations de sorte que l'élément de paroi permanent de la deuxième canalisation forme un élément de paroi commun (310A) pour les première et deuxième canalisations selon l'axe longitudinal des première et deuxième canalisations ;
dans lequel un élément de raccord (323B) est accouplé à l'élément de paroi commun et fait partie d'un joint de dilatation, dans lequel une première portion (323'B) de l'élément de raccord s'étend dans un volume interne de la première canalisation et dans lequel une autre portion (323"B) de l'élément de raccord s'étend dans un volume interne de la deuxième canalisation ;
l'accouplement depuis l'intérieur des première et deuxième canalisations d'une première et d'une seconde étoffe de dilatation (330B, 332B) à la première portion et à l'autre portion à l'élément de raccord via une pluralité d'attaches (340B), respectivement ; et
l'accouplement des première et seconde brides d'alignement depuis l'extérieur des première et deuxième canalisations pour former l'ensemble de canalisations contiguës.

13. Procédé selon la revendication 12, comprenant en outre une étape d'accouplement d'un dispositif pare-poussière (360A) à au moins l'une des première et deuxième canalisations (301A, 302A) ou à l'élément de raccord (323B).

14. Procédé selon la revendication 12, dans lequel les première et seconde brides d'alignement sont accouplées amovibles l'une à l'autre.
